# NEUE EUROPÄISCHE PATENTSCHRIFT

(11) **EP 2 220 970 B2**
(45) Veröffentlichungstag und Bekanntmachung des Hinweises auf die Entscheidung über den Einspruch: **20.01.2016**
(45) Hinweis auf die Patenterteilung: 21.11.2012
(21) Anmeldenummer: 10003803.3
(22) Anmeldetag: 09.04.2010
(51) Int. Cl.: A47J 27/62

(54) **Gargut-Zubereitung mit Detektion einer Abkühlrate**
Refining preparation with detection of a cooling rate
Préparation d'un produit de cuisson avec détection de la vitesse de refroidissement

(43) Veröffentlichungstag der Anmeldung: 25.08.2010
(73) Patentinhaber: V-Zug AG, 6301 Zug (CH)
(72) Erfinder: Estermann, Barbara, 6300 Zug (CH); Schmidberger, Wolfgang, 86899 Landsberg am Lech (DE)
(74) Vertreter: Sutter, Kurt

(56) Entgegenhaltungen:
- EP-A1- 1 847 203
- EP-A2- 2 154 435
- US-A1- 2009 229 474
- US-B1- 6 447 827

## Beschreibung

### Gebiet der Erfindung

Die Erfindung bezieht sich auf ein Verfahren zum Zubereiten von Gargut im Garraum eines Backofens gemäss Oberbegriff von Anspruch 1 sowie auf einen Backofen mit einer Steuerung ausgestaltet zur automatischen Durchführung des Verfahrens.

### Hintergrund

Aus EP 1 847 203 ist ein Gargerät bekannt, das einen Dampfaustritt-Sensor besitzt, mit welchem der Austritt von Dampf aus dem Gargut detektiert werden kann. Die Zeit bis zum ersten Dampfaustritt wird dazu verwendet, den Startzeitpunkt oder die Zeitdauer mindestens einer folgenden Zubereitungsphase festzulegen.

Mit anderen Worten kann auf diese Weise also ein Gargutparameter gemessen werden, der dazu eingesetzt wird, mindestens einen der Prozessparameter der Behandlung des Garguts festzulegen.

### Darstellung der Erfindung

Aufgabe der vorliegenden Erfindung ist es, diese Art von Technik zu verfeinern und eine differenziertere Möglichkeit bereitzustellen, den bzw. die Prozessparameter der Gargutbehandlung festzulegen.

Diese Aufgabe wird vom Verfahren und dem Backofen gemäss den Hauptansprüchen erfüllt.

Demgemäss wird der Garraum also in einer Anlaufphase mit einer Heizung aufgeheizt. An die Anlaufphase schliesst eine Messphase an, während der sich das Gargut im Garraum befindet und die Heizung deaktiviert wird, so dass sie nicht oder allenfalls nur mit vernachlässigbarer Leistung läuft. Dies führt zu einem Absinken der Temperatur im Garraum, wobei die Absinkgeschwindigkeit von der Art und Grösse des Garguts abhängig ist. Anspruchsgemäss wird nun ein erster Gargutparameter abhängig von dieser Absinkgeschwindigkeit ermittelt, und dieser Gargutparameter wird sodann dazu eingesetzt, mindestens einen der Prozessparameter der Behandlung des Garguts festzulegen.

Dieses Verfahren erlaubt gegenüber jenem gemäss EP 1 847 203 zusätzliche oder andere Kenntnisse über das Gargut zu gewinnen, was eine differenziertere oder zumindest andersartige Steuerung des Garraums erlaubt.

Ein weiterer Vorteil des vorliegenden Verfahrens liegt darin, dass die Absinkgeschwindigkeit nicht direkt von der (zum Voraus nicht genau bekannten) Netzspannung abhängt, dies im Gegensatz zu einem Verfahren, bei welchem ein Parameter abhängig von der Anstiegsgeschwindigkeit der Temperatur während dem Heizen des Garraums gemessen wird.

Während der Anlaufphase kann sich das Gargut im Garraum befinden oder auch nicht. Vorzugsweise wird das Gargut zumindest vor Ende der Anlaufphase in den Garraum eingeführt, so dass zu Beginn der Messphase definierte Verhältnisse im Garraum herrschen. Vorzugsweise wird deshalb das Gargut mindestens eine Minute vor Ende der Anlaufphase in den Garraum eingeführt.

Der Prozessparameter, der aus dem ersten Gargutparameter (und allenfalls weiteren gemessenen Gargutparametern) bestimmt wird, ist die Prozessdauer eines Prozessschritts nach der Messphase. Dabei wird die Prozessdauer mit zunehmender Absinkgeschwindigkeit grösser gewählt, da eine grössere Absinkgeschwindigkeit auf schweres und/oder thermisch träges Gargut hinweist.

Die Erfindung betrifft auch einen Backofen zur Durchführung dieses Verfahrens. Dieser Backofen besitzt eine Steuerung, welche mittels geeigneter Programme und Sensoren dazu ausgestaltet ist, den ersten Gargutparameter während der Messphase zu messen und daraus mindestens einen der Prozessparameter zu bestimmen, um sodann den Garprozess entsprechend zu steuern.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 einen schematischen Schnitt durch ein Gargerät,
Fig. 2 den Temperaturverlauf im Garraum für Gargut unterschiedlicher Masse und
Fig. 3 das Integral der Temperatur mit t2a - t2 = t2b - t2a = 75 Sekunden für Kartoffelgratins mit unterschiedlichem Gewicht.

### Wege zur Ausführung der Erfindung

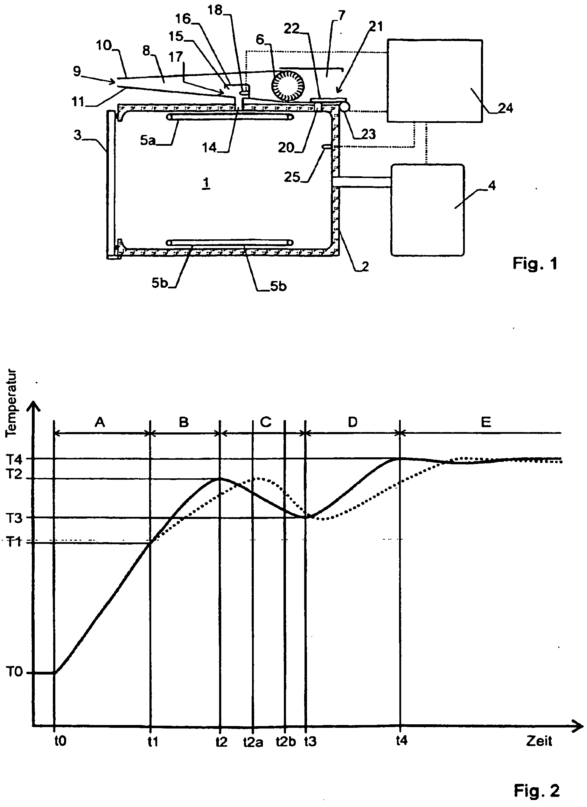

Gargerät:
Das Gargerät gemäss Fig. 1, bei welchem es sich um einen Backofen handelt, besitzt einen Garraum 1, der von Wänden 2 und einer Türe 3 begrenzt wird. Das als Beispiel gezeigte Gerät kann sowohl als Backofen, als auch als Dampfgargerät betrieben werden. Es besitzt eine konventionelle resistive Heizung mit Oberhitze 5a und Unterhitze 5b (welche sich, wie dargestellt, innerhalb des Garraums 1, aber auch ausserhalb des Garraums 1 befinden können). Weiter kann die Heizung des Geräts auch einen Dampfgenerator 4 umfassen, wie er z.B. in EP 1 166 694 beschreiben ist. Der Dampfgenerator 4 wird beispielsweise in der in EP 1 847 203 beschriebenen Weise angesteuert. Die Heizung 4, 5a, 5b dient dazu, die sich im Garraum befindlichen Gase aufzuheizen.

Alternativ oder zusätzlich zur resistiven Heizung 5a, 5b kann das Gerät auch mit Heissluft oder mit einem Grill-Heizkörper ausgestattet sein.

Ausserhalb des Garraums 1 ist im gezeigten Ausführungsbeispiel ein Querstromlüfter 6 als Gebläse angeordnet. Je nach benötigter Bauform können auch andere Lüftertypen, wie z.B. Radiallüfter, eingesetzt werden. Der Lüfter fördert Luft von einem Ansaugbereich 7 in einen Druckraum 8. Vom Druckraum 8 tritt die geförderte Luft durch eine frontseitige Austrittsöffnung 9 des Geräts in die Umgebung aus. Der Druckraum 8 wird nach oben durch eine geneigte Deckplatte 10 und nach unten durch eine geneigte Bodenplatte 11 begrenzt, derart, dass sich der Druckraum 8 gegen die Austrittsöffnung 9 hin verjüngt. Seitlich ist der Druckraum durch Seitenwände (nicht gezeigt) geschlossen. Die sich gegen die Austrittsöffnung 9 hin verjüngende Ausgestaltung des Druckraums 8 ist nicht unbedingt notwendig. Denkbar ist auch eine im Wesentlichen parallele Führung der Deckplatte 10 und der Bodenplatte 11.

In der Decke des Garraums 1 sind im gezeigten Beispiel zwei Öffnungen 14, 20 angeordnet.

Das Gerät besitzt einen Dampfaustritt-Sensor. Dieser umfasst die erste Öffnung 14, welche als Messöffnung dient und vom Garraum 1 in den Innenraum 15 eines Schutzgehäuses 16 führt. Das Schutzgehäuse 16 ist im Druckraum 8 angeordnet und kommuniziert mit diesem über eine Verbindungsöffnung 17. Die Verbindungsöffnung 17 befindet sich auf der dem Gebläse abgewandten Seite des Schutzgehäuses 16. Im Schutzgehäuse 16 ist ferner bei der Mündung der ersten Öffnung 14 ein Temperatursensor 18 angeordnet, der eine Temperatur Tx misst. Die erste Öffnung 14 ist immer geöffnet.

Eine zweite, vom Gargerät automatisch öffenbare und schliessbare Öffnung 20 verbindet den Garraum 1 mit dem Ansaugbereich 7 vor dem Gebläse 6. Zum Verschliessen der zweiten Öffnung 20 ist ein Verschluss 21 vorgesehen, der aus einer Klappe 22 besteht, die von einem Schritt- oder Servomotor 23 mehr oder weniger weit über die Mündung der Öffnung 20 geschoben werden kann, derart dass der Verschluss kontinuierlich oder Schrittweise von einer geschlossenen in eine geöffnete Stellung übergeführt werden kann.

Die Öffnungen 14, 20, der Dampfaustritt-Sensor, sowie das Lüftungssystem 6 - 11 können im Kontext der vorliegenden Erfindung auch entfallen oder anders ausgestaltet sein.

Im oder am Garraum 1, vorzugsweise im Garraum 1, ist ferner ein Garraumtemperatur-Sensor 25 vorgesehen, mit welchem die Temperatur des Garraums 1 gemessen werden kann.

Zum Steuern des Dampfgenerators 4, des Verschlusses 21 und der weiteren Komponenten des Gargeräts ist eine Steuerung 24 vorgesehen, die unter anderem das vom Temperatursensor 25 abgegebene Temperatursignal überwacht und die im Folgenden beschriebenen Messungen durchführt.

Im Betrieb des Gargeräts läuft das Gebläse 6 vorzugsweise dauernd. Dabei saugt es Luft durch Öffnungen in der Rückwand und in den Seitenwänden des Gargeräts aus der Umgebung an. Diese Luft durchtritt den Ansaugbereich 7, wird in den Druckraum 8 geblasen und verlässt diesen durch die Austrittsöffnung 9. Da der Druckraum 8 gegen die Austrittsöffnung 9 hin verjüngt ist, entsteht dabei im Druckraum 8 ein leichter Überdruck, d.h. ein Druck, der höher als der Umgebungsdruck ist, während der Druck im Ansaugbereich 7 geringer ist. Damit muss im Garraum 1 ein gewisser Überdruck herrschen, damit der Temperatursensor 18 anspricht. Andererseits kann durch Öffnen der Öffnung 20 dem Garraum 1 schnell und effizient Dampf entzogen werden.

Des Weiteren besteht die Aufgabe des Gebläses 6 darin, zur Kühlung des Geräts die Luft, die sich an der Aussenseite des Garraums erwärmt hat, nach aussen abzuführen.

Das hier gezeigte Gerät kann in verschiedenen Betriebsmodi betrieben werden, wozu die Steuerung 24 mit geeigneten Eingabeelementen versehen ist, über welche der Benutzer ein gewünschtes Programm auswählen kann. Insbesondere kann das Gerät in konventioneller Weise als Gargerät eingesetzt werden, zum Beispiel unter Eingabe einer gewünschten Garraumtemperatur.

Zusätzlich ist mindestens ein Betriebsmodus vorgesehen, welcher einen Betrieb des Gerätes gemäss einem erfindungsgemässen Verfahren erlaubt. Bevorzugte Aspekte dieses Verfahrens werden im Folgenden beschrieben.

Betriebsverfahren:
Fig. 2 illustriert ein Verfahren zum Zubereiten von Gargut im Garraum 1, beispielsweise zur Zubereitung eines Auflaufs. Das dargestellte Verfahren umfasst, zum Beispiel:
   - Eine Anlaufphase, in welcher der Garraum 1 mit der Heizung 4, und/oder 5a, 5b geheizt wird und eine erste Aufwärmung des Garraums 1 stattfindet. Die Anlaufphase umfasst ihrerseits eine Phase A ohne Gargut und eine Phase B mit Gargut.
   - Eine Messphase, in welcher die Heizung 4, 5a, 5b deaktiviert ist und eine im Folgenden beschriebene Messung stattfindet.
   - Eine Nachheizphase D, in welcher der Garraum wieder geheizt wird.
   - Eine Garphase E, in welcher die Temperatur im Garraum konstant gehalten wird.

Im Folgenden wird die Funktion der einzelnen Phasen näher beschrieben.

### Anlaufphase A, B

Die Anlaufphase A, B verfolgt verschiedene Zwecke. Primärer Zweck im vorliegenden Kontext ist es, den Garraum 1 in einen vordefinierten Zustand zu bringen, bevor die Messphase C durchlaufen wird. Insbesondere kann es sein, dass zu Beginn des Garprozesses der Garraum Zimmertemperatur besitzt, er kann aber z.B. auch von einem vorhergehenden Prozess noch erwärmt sein. Indem der Garraum in der Anlaufphase A, B geheizt wird, kann er unabhängig von der Starttemperatur in einen definierten thermischen Zustand gebracht werden.

Die Anlaufphase A, B kann prinzipiell mit oder ohne Gargut durchlaufen werden. Insbesondere wenn das Gargut kein Vorheizen benötigt, kann es bereits zu Beginn der Anlaufphase A, B in den Garraum 1 eingebracht werden.

Auch wenn das Gargut jedoch ein Vorheizen des Garraums benötigt, wird es vorzugsweise vor Ende der Anlaufphase A, B, d.h. vor Beginn der Messphase C in den Garraum 1 eingebracht, so dass sich der Temperaturverlauf im Garraum 1 nach dem entsprechenden Öffnen und Schliessen der Türe 3 wieder stabilisieren kann, bevor die Messphase C beginnt. Somit ist die Anlaufphase in eine Phase A ohne Gargut und eine Phase B mit Gargut unterteilt. Die Phase A erstreckt sich vom Startzeitpunkt t0 zu einem Zeitpunkt t1, wobei t1 gleich t0 sein kann, wenn das Gargut von Anfang an im Garraum 1 ist. Die Phase B erstreckt sich vom Zeitpunkt t1 zu einem Zeitpunkt t2.

Soll das Gargut nicht von Anfang an in den Garraum 1 eingeführt werden (d.h. t1 > t0), so aktiviert die Steuerung 24 des Gargeräts vorzugsweise einen Signalgeber, wie z.B. einen Tongeber und/oder eine Lampe, um dem Benutzer anzuzeigen, wann es Zeit ist, das Gargut in den Garraum 1 einzuführen. Der Zeitpunkt t1 bestimmt sich vorzugsweise durch das Erreichen einer gewissen Temperatur T1, welche z.B. 120°C beträgt.

Die Steuerung 24 kann das Öffnen und Schliessen der Türe 3 überwachen, um festzustellen, wann der Benutzer das Gargut einführt. Danach wird die Phase B fortgesetzt.

Während der Anlaufphase A, B kann die Heizung 4, 5a, 5b mit fester Leistung in Betrieb sein, oder sie kann z.B. so gesteuert werden, dass die Garraumtemperatur einem vorgegebenen Anstieg folgt.

Die Dauer der Anlaufphase A, B beträgt z.B. zwischen 3 und 7 Minuten, und deren Ende wird vorzugsweise durch das Erreichen einer Temperatur T2 definiert, vgl. nächster Abschnitt.

### Messphase C

Die Messphase C kann nach vorgegebener Zeit starten, vorzugsweise wird sie aber abhängig von der Garraumtemperatur gestartet. Vorzugsweise sollte zu Beginn der Messphase eine Temperatur von mindestens 120 °C im Garraum herrschen, so dass grosse Unabhängigkeit von der Anfangstemperatur erreicht wird. Damit wird auch erreicht, dass eine recht grosse Wärmemenge in den Garraum 1 und insbesondere auch dessen Wände 2 und die Türe 3 eingetragen worden ist, die während der Messphase C teilweise in das Gargut übergehen kann. Vorzugsweise sollte die Temperatur zu Beginn der Messphase jedoch höchstens 200 °C betragen, da ansonsten das Gargut beschädigt werden könnte. In einer bevorzugten Ausführung beträgt die Temperatur T2 zu Beginn der Messphase C (Zeitpunkt t2) ca. 165 °C.

Während der Messphase C ist die Heizung 4, 5a, 5b deaktiviert, d.h. sie trägt keine oder nur vernachlässigbar wenig Wärme in den Garraum 1 ein. Somit kühlt sich der Garraum 1 während der Messphase 1 ab, wobei ein Teil der Wärme in das Gargut übergeht, das sich während der gesamten Messphase C im Garraum 1 befindet und eine tiefere Temperatur als der Garraum 1 besitzt. Die Wärmemenge, die dabei vom Gargut aufgenommen wird, hängt von dessen Masse bzw. thermischer Kapazität sowie Oberfläche ab. Wird eine grosse Menge Gargut eingeführt, so fällt die Temperatur im Garraum 1 schneller ab als bei einer kleineren Menge Gargut. Dies ist in Fig. 2 schematisch durch zwei Kurven illustriert, wobei die durchgezogene Kurve ein "kleines" Gargut darstellt und die gestrichelte Kurve ein "grosses" Gargut. Wie ersichtlich, braucht das Gargerät bei grossen Gargut zwar länger, um den Garraum 1 auf die Temperatur T2 zu bringen, der Abfall der Temperatur des Garraums 1 ist danach jedoch schneller als bei einem kleinen Gargut.

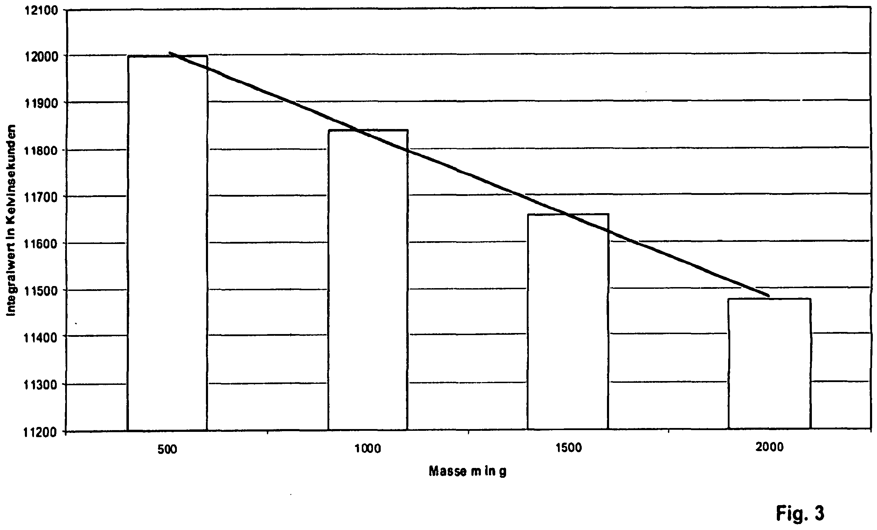

Wie erwähnt, wird in der Messphase C ein von der Absinkgeschwindigkeit der Garraumtemperatur abhängiger Gargutparameter gemessen. Hierzu gibt es verschiedene Möglichkeiten, beispielsweise:
- Es wird eine gemittelte Temperatur Tm (bzw. das Temperaturintegral) über einen Teilbereich der Messphase ermittelt. Beispielsweise kann diese gemittelte Temperatur über ein Zeitintervall t2a bis t2b nach dem Beginn t2 der Messphase C ermittelt werden. Dabei kann t2a - t2, d.h. der Abstand vom Start der Messphase C, z.B. 75 Sekunden betragen, und t2b - t2a, d.h. die Dauer der Mittelung, ebenfalls 75 Sekunden. Die so ermittelte gemittelte bzw. integrierte Temperatur Tm ist ein gutes Mass für das Gewicht des Garguts. Dies ist in Fig. 3 illustriert, wo die integrierte Temperatur Tm für Kartoffelgratins mit Gewicht 500 g, 1000 g, 1500 g und 2000 g dargestellt ist.
- Anstelle einer gemittelten bzw. integrierten Temperatur kann auch z.B. die mittlere Abfallrate im Zeitbereich t2a bis t2b gemessen werden.
- Als weitere Variante kann gemessen werden, wie lange es braucht, bis sich der Garraum um eine vorgegebene Temperaturdifferenz gegenüber T2 abgekühlt hat.

Der so ermittelte Gargutparameter kann sodann verwendet werden, um mindestens einen Prozessparameter des Garvorgangs festzulegen. Näheres hierzu ergibt sich aus den folgenden Ausführungen.

Die Messphase C endet nach gewisser Zeit (Zeitpunkt t3) oder, alternativ, wenn die Garraumtemperatur unter eine vorgegebene Schwelle (Temperatur T3) absinkt.

Die Dauer der Messphase beträgt beispielsweise zwischen 100 und 200 Sekunden, vorzugweise 150 Sekunden. Während dieser Zeit fällt die Temperatur im Garraum beispielsweise zwischen 20 und 40 °C ab. Eine Dauer von mindestens 100 Sekunden ist bevorzugt, damit von transienten Effekten unabhängige Messungen durchgeführt werden können.

Wird ein Umluftbackofen bzw. ein Backofen mit Ventilator zum Umwälzen der Luft im Garraum 1 verwendet, so wird während der Messphase C der Ventilator vorzugsweise in Betrieb gehalten, so dass die Luft im Garraum umgewälzt wird, damit sich eine gute Luftdurchmischung ergibt. Damit ergeben sich genauere, d.h. stärker von der Gargutmenge abhängige, Messwerte beim Temperatursensor.

### Nachheizphase D

An die Messphase kann eine Nachheizphase D anschliessen. In dieser Phase, welche sich zwischen dem Zeitpunkt t3 und einem Zeitpunkt t4 erstreckt, wird der Garraum auf eine Endtemperatur T4 aufgeheizt, welche z.B. bei 180°C liegt.

### Garphase E

Nach der Nachheizphase D folgt eine Garphase E, in welcher die Heizung beispielsweise so geregelt wird, dass die Temperatur im Garraum konstant auf der Temperatur T4 bleibt. Denkbar sind jedoch auch andere Regelverfahren, z.B. aufgrund der Kerntemperatur des Garguts, wie dies in EP 723 115 beschrieben ist.

Vorzugsweise wird die Garphase E automatisch beendet, z.B. indem die Heizung 4, 5a, 5b abgestellt und/oder der Benutzer alarmiert wird.

### Prozessparameter

Der in der Messphase C bestimmte Gargutparameter kann, wie erwähnt, verwendet werden, um einen Prozessparameter des Garverfahrens festzulegen. Beispielsweise kommen hierzu folgende Möglichkeiten in Frage:
- Die Dauer der Garphase E wird aufgrund des Gargutparameters festgelegt. Wenn der Gargutparameter auf eine grosse Masse schliessen lässt, wird für die Garphase E mehr Zeit eingeräumt. Wird beispielsweise das in Fig. 3 gezeigte Integral gemessen, so kann in einem Programm für Gratins die Dauer der Garphase E beispielsweise entsprechend folgender Tabelle festgelegt werden:

| Tm | Dauer Garphase E |
|---|---|
| 12000 | 30 min |
| 11800 | 33 min |
| 11600 | 36 min |
| 11400 | 38 min |

- (Nicht beansprucht:) Die Temperatur und insbesondere der Temperaturverlauf in der Nachheizphase und/oder Garphase E wird aufgrund des Gargutparameters festgelegt. Beispielsweise kann, falls gleichzeitig die Gardauer bei grossem Gargut verlängert wird, die Temperatur bei grossen Gargut anfänglich etwas tiefer sein und erst gegen Schluss dem Endwert angenähert werden, um eine Schwärzung des Garguts zu vermeiden.

Weitere (nicht beanspruchte) Beispiele für Prozessparameter, die abhängig von der Gargutmenge variiert werden können, finden sich in EP 1 847 203.

### Andere Gargutparameter

Zusätzlich zum oben erwähnten Gargutparameter, der im Folgenden und in den Ansprüchen als "erster Gargutparameter" bezeichnet wird, können auch andere Gargutparameter, d.h. von der Art des Garguts abhängige, gemessene Grössen eingesetzt werden, um zusammen mit dem ersten Gargutparameter einen oder mehrere Prozessparameter festzulegen. Beispiele:
- Ein zweiter Gargutparameter kann aus der Aufheizgeschwindigkeit des Garraums während der Zeit ermittelt werden, in welcher sich das Gargut in der Anlaufphase in Garraum befindet. Hierzu wird in der Phase B eine von der Aufheizgeschwindigkeit der Garraumtemperatur abhängige Grösse gemessen, wie z.B. eine über einen definierten Zeitraum gemittelte Temperatur oder Temperaturanstiegsrate.
- Ein dritter Gargutparameter kann mit dem Dampfaustritt-Sensor 15 - 19 bestimmt werden, in der in EP 1 847 203 beschriebenen Weise, indem z.B. in der Anlaufphase A, B oder der Nachheizphase D gemessen wird, wann Dampf auf dem Gargut austritt.

In diesem Fall wird der Prozessparameter abhängig vom ersten und zweiten Gargutparameter bzw. abhängig vom ersten und dritten Gärgutparameter bestimmt. Geeignete Abhängigkeiten können in Testreihen ermittelt werden.

### Bemerkungen:

Die Öffnung 20 kann während der Messphase C geöffnet oder geschlossen sein.

Die Messphase C kann auch zu einem späteren Zeitpunkt durchgeführt werden, oder es können bei beim Garen eines Garguts mehrere Messphasen durchlaufen werden, zwischen denen der Garraum wieder geheizt wird. Wird das Gargut während dem Garen dehydriert, so sinkt die Abfallgeschwindigkeit der Garraumtemperatur in diesen Messphasen aufgrund des Wasserverlusts dauernd, und es lässt sich so z.B. feststellen, wann das Gargut ausreichend getrocknet worden ist, worauf der Garvorgang beendet wird.

Der Begriff "Garen" ist im vorliegenden Kontext breit zu verstehen und umfasst jegliche Wärmebehandlung des Garguts, so z.B. auch ein Auftauen oder ein Trocknen des Garguts.

## Patentansprüche

1. Verfahren zum Zubereiten von Gargut im Garraum (1) eines Backofens, bei welchem das Gargut im Garraum (1) abhängig von Prozessparametern behandelt wird, wobei der Garraum (1) in einer Anlaufphase mit einer Heizung (4, 5a, 5b) aufgeheizt wird und wobei ein erster Gargutparameter gemessen und abhängig vom ersten Gargutparameter mindestens einer der Prozessparameter festgelegt wird, wobei abhängig vom ersten Gargutparameter mindestens eine Prozessdauer eines Prozessschritts nach der Messphase festgelegt wird, und wobei nach der Anlaufphase in mindestens einer Messphase, während welcher sich das Gargut im Garraum (1) befindet, die Heizung (4, 5a, 5b) deaktiviert wird und der erste Gargutparameter abhängig von einer Absinkgeschwindigkeit einer Temperatur des Garraums (1) während der Messphase festgelegt wird, wobei die Prozessdauer mit zunehmender Absinkgeschwindigkeit grösser gewählt wird.

2. Verfahren nach einem der vorangehenden Ansprüche, wobei der Garraum (1) zu Beginn der Messphase eine Temperatur von mindestens 120 °C besitzt, und insbesondere wobei der Garraum (1) zu Beginn der Messphase eine Temperatur von höchsten 200 °C besitzt.

3. Verfahren nach einem der vorangehenden Ansprüche, wobei die Messphase bei Erreichen einer vorgegebenen Temperatur eingeleitet wird.

4. Verfahren nach einem der vorangehenden Ansprüche, wobei das Gargut vor Ende der Anlaufphase in den Garraum (1) eingeführt wird.

5. Verfahren nach Anspruch 4, wobei das Gargut mindestens eine Minute vor Ende der Anlaufphase in den Garraum (1) eingeführt wird.

6. Verfahren nach einem der Ansprüche 4 oder 5, wobei ein zweiter Gargutparameter aus einer Aufheizgeschwindigkeit des Garraums (1) während der Zeit ermittelt wird, in welcher sich das Gargut in der Anlaufphase im Garraum (1) befindet, und wobei abhängig vom ersten und zweiten Gargutparameter mindestens einer der Prozessparameter festgelegt wird.

7. Verfahren nach einem der Ansprüche 4 bis 6, wobei von einer Steuerung (24) des Backofens ein Signalgeber am Backofen aktiviert wird, wenn das Gargut in den Garraum (1) einzuführen ist.

8. Verfahren nach den Ansprüchen 6 und 7, wobei die Steuerung (24) ein Öffnen und Schliessen einer Türe (3) des Backofens überwacht.

9. Verfahren nach einem der vorangehenden Ansprüche, wobei der Backofen einen Dampfaustritt-Sensor (15 - 19) aufweist, mit welchem ein Dampfaustritt aus dem Gargut gemessen wird, wobei abhängig von einem Zeitpunkt eines ersten Dampfaustritts ein dritter Gargutparameter festgelegt wird, und wobei abhängig vom ersten und dritten Gargutparameter mindestens einer der Prozessparameter festgelegt wird.

10. Verfahren nach einem der vorangehenden Ansprüche, wobei beim Garen eines Garguts mehrere Messphasen durchlaufen werden, zwischen denen der Garraum (1) geheizt wird.

11. Verfahren nach einem der vorangehenden Ansprüche, wobei eine Dauer der Messphase mindestens 100 Sekunden beträgt.

12. Verfahren nach einem der vorangehenden Ansprüche, wobei während der Messphase die Luft im Garraum (1) mit einem Ventilator umgewälzt wird.

13. Backofen zur Durchführung des Verfahrens nach einem der vorangehenden Ansprüche, mit einer Steuerung (24), welche dazu ausgestaltet ist, den ersten Gargutparameter und daraus mindestens einen der Prozessparameter zu bestimmen.

## Claims

1. Method for cooking food in the cooking space (1) of an oven, for which the food is treated in the cooking space (1) depending on process parameters, wherein the cooking space (1) is heated up by means of a heater (4, 5a, 5b) in a start up phase and wherein a first food parameter is measured and depending on the first food parameter at least one of the process parameters is determined, wherein at least a process duration of a process step is determined depending on the first food parameter after the measurement phase, and wherein after the start up phase, during at least one measurement phase, during which the food is located in the cooking space (1), the heater (4, 5a, 5b) is deactivated and the first food parameter is determined depending on a descent rate of a temperature of the cooking space (1) during the measurement phase, wherein the process duration is chosen to be longer with increasing descent rate.

2. Method according to one of the preceding claims, wherein the cooking space (1) has a temperature of at least 120°C at the beginning of the measurement phase, and particularly wherein the cooking space (1) has a temperature of not more than 200°C at the beginning of the measurement phase.

3. Method according to one of the preceding claims, wherein the measurement phase is initiated when a pre-set temperature is reached.

4. Method according to one of the preceding claims, wherein the food is inserted into the cooking space (1) before the start up phase ends.

5. Method according to claim 4, wherein the food is inserted into the cooking space (1) at least one minute before the start up phase ends.

6. Method according to one of the claims 4 or 5, wherein a second food parameter is determined from a heat up rate of the cooking space (1) during the time when the food is located in the cooking space (1) in the start up phase, and wherein depending on the first and the second food parameter at least one of the process parameters is determined.

7. Method according to one of the claims 4 to 6, wherein a signal transmitter at the oven is activated by a controller (24) of the oven when the food is about to be inserted into the cooking space (1).

8. Method according to claims 6 and 7, wherein the controller (24) monitors an opening and a closing of a door (3) of the oven.

9. Method according to one of the preceding claims, wherein the oven has a steam escape sensor (15 - 19), by means of which a steam escape from the food is measured, wherein a third food parameter is determined depending on a time of a first steam escape, and wherein at least one of the process parameters is determined depending on the first and the third food parameter.

10. Method according to one of the preceding claims, wherein a plurality of measurement phases are run through during the cooking of the food, between which the cooking space (1) is heated up.

11. Method according to one of the preceding claims, wherein a duration of the measurement phase amounts to at least 100 seconds.

12. Method according to one of the preceding claims, wherein the air in the cooking space (1) is circulated by means of a fan during the measurement phase.

13. Oven for carrying out the method according to one of the preceding claims, with a controller (24) which is adapted to determine the first food parameter and from it at least one of the process parameters.

## Revendications

1. Procédé pour préparer des aliments dans une chambre de cuisson (1) d'un four, pour laquelle les aliments sont traités à l'intérieur de la chambre de cuisson (1) dépendant des paramètres de procédé, la chambre de cuisson (1) étant chauffée à l'aide d'un chauffage (4, 5a, 5b) dans une phase de démarrage et un premier paramètre des aliments étant mesuré et au moins un des paramètres de procédé étant déterminé en dépendance du premier paramètre des aliments, au moins une durée de procédé d'une étape de procédé étant déterminée après la phase de mesure en dépendance du premier paramètre des aliments et, pendant une phase de mesure, pendant laquelle les aliments se trouvent à l'intérieur de la chambre de cuisson (1), suivant la phase de démarrage, le chauffage (4, 5a, 5b) étant désactivée et le premier paramètre des aliments étant déterminé pendant la phase de mesure en dépendance d'une vitesse de descente d'une température de la chambre de cuisson (1), la durée de procédé étant choisie de telle manière qu'elle augmente en fonction d'une vitesse de descente croissante.

2. Procédé selon l'une des revendications précédentes, la chambre de cuisson (1) ayant une température d'au moins 120°C au début de la phase de mesure, et particulièrement la chambre de cuisson ayant une température d'au maximum 200°C au début de la phase de mesure.

3. Procédé selon l'une des revendications précédentes, la phase de mesure étant initiée quand une température donnée est atteinte.

4. Procédé selon l'une des revendications précédentes, les aliments étant insérés dans la chambre de cuisson (1) avant la fin de la phase de démarrage.

5. Procédé selon la revendication 4, les aliments étant insérés dans la chambre de cuisson (1) au moins une minute avant la fin de la phase de démarrage.

6. Procédé selon l'une des revendications 4 ou 5, un deuxième paramètre des aliments étant déterminé à partir d'une vitesse de chauffage de la chambre de cuisson (1) pendant le temps dans lequel les aliments se trouvent dans la chambre de cuisson dans la phase de démarrage, et au moins un des paramètres de procédé étant déterminé en dépendance du premier et du deuxième paramètre des aliments.

7. Procédé selon l'une des revendications précédentes, un générateur de signal étant activé au four par une commande (24) du four quand les aliments doivent être insérés dans la chambre de cuisson (1).

8. Procédé selon les revendications 6 et 7, la commande (24) surveillant une ouverture et une fermeture d'une porte (3) du four.

9. Procédé selon l'une des revendications précédentes, le four ayant un capteur d'échappement de vapeur (15 - 19), à l'aide duquel un échappement de vapeur des aliments est mesuré, un troisième paramètre des aliments étant déterminé en dépendance d'un instant d'un premier échappement de vapeur, et au moins un des paramètre de procédé étant déterminé en dépendance du premier et du troisième paramètre des aliments.

10. Procédé selon l'une des revendications précédentes, plusieurs phases de mesure se déroulant pendant le cuisson des aliments, entre lesquelles la chambre de cuisson (1) est chauffée.

11. Procédé selon l'une des revendications précédentes, la durée de la phase de mesure s'élevant à au moins 100 secondes.

12. Procédé selon l'une des revendications précédentes, l'air dans la chambre de cuisson (1) étant circulé par un ventilateur pendant la phase de mesure.

13. Four pour la mise en oeuvre du procédé selon l'une des revendications précédentes, avec une commande (24) qui est adaptée pour déterminer le premier paramètre des aliments et du premier paramètre des aliments au moins un des paramètres de procédé.
